# EUROPÄISCHE PATENTANMELDUNG

(11) **EP 1 324 292 A2**
(43) Veröffentlichungstag der Anmeldung: **02.07.2003**
(21) Anmeldenummer: 02025541.0
(22) Anmeldetag: 14.11.2002
(51) Int. Cl.: G09B 9/00

(54) **Simulator, insbesondere zur Simulation von Brand und Rauch**

(30) Priorität: 24.12.2001 DE 10164114
(71) Anmelder: Käufer, Rolf, 45257 Essen (DE)
(72) Erfinder: Käufer, Rolf, 45257 Essen (DE)
(74) Vertreter: Gille Hrabal Struck Neidlein Prop Roos

(57) **Zusammenfassung**

Die Erfindung betrifft einen Simulator, insbesondere einen solchen zur Simulation von Brandereignissen und zum Trainieren des Verhaltens bei Rauch. Der erfindungsgemäße Simulator ermöglicht es insbesondere der breiten Masse der Tunnelbenutzer, also Kraftund LKW-Fahrern, das richtige Verhalten bei einem Tunnelbrand zu trainieren, Der erfindungsgemäße Simulator besitzt einen Raum, in dem sich die übenden Personen befinden. Durch Sichtbehinderungsmittel, z.B. in Gestalt eines Rauchgenerators, wurde der Raum zunächst, d. h. bevor die Personen den Raum betreten, mit Rauch gefüllt, so dass die im Raum aufgestellten Rettungsmittel, z.B. eine Fluchttüre, nicht erkennbar sind. Durch die im Raum vorgesehenen Orientierungsmittel, z.B. Leuchtstreifen, Pfeile Wand- oder Bodenmarkierungen, lernen die übenden Personen, die Bedeutung dieser Orientierungshilfen zu erkennen und diesen zu vertrauen, um die rettende Tür zu erreichen.

## Beschreibung

Die Erfindung betrifft einen Simulator, insbesondere einen solchen zur Simulation von Brandereignissen und zum Trainieren des Verhaltens bei Rauch.

Brände in Tunneln, insbesondere in Straßentunneln, fordern auch deshalb viele Opfer, weil die eingeschlossenen Personen die Fluchtwege nicht kennen, im Rauch die Orientierung verlieren und mit den Sicherheitseinrichtungen im Inneren eines Tunnels nicht vertraut sind. In der Vergangenheit wurden zahlreiche Investitionen getätigt, um besser ausgestattete Tunnel zu erhalten, die z.B. mehrere Röhren, spezielle Sprinkler- und großdimensionierte Absauganlagen, Notbeleuchtungseinrichtungen und Fluchtwege aufweisen, die in kurzen Abständen installiert sind. Derartige Maßnahmen mindern nur die Unfallhäufigkeit und bieten den Beteiligten eine größere Chance im Notfall gerettet zu werden. Eine Schwachstelle dabei ist jedoch, dass die im Tunnel von einem Brand überraschten Personen oder Unfallbeteiligten nie zuvor die Möglichkeit hatten, eine solche Notfallsituation zu üben und daher auch nicht in der Lage sind, die vorhandenen und angebotenen Rettungsmittel und -wege zu nutzen. Ohne die Wirkung von Rauch selber erfahren zu haben, kann sich niemand die im Rauch herrschende Orientierungslosigkeit und Hilflosigkeit vorstellen. Dieses wiegt umso schwerer, da oft nur wenige Sekunden Entscheidungszeit verbleiben. Um diese wirkungsvoll nutzen zu können, ist die Kenntnis der Fluchtrichtung, der Orientierungshilfsmittel, der Rettungsmittel, sowie das richtige Verhalten beim Entstehen von Rauch überlebenswichtig.

Es ist daher Aufgabe der vorliegenden Erfindung, einen preisgünstigen Simulator zum Trainieren von Flucht und Brandbekämpfung bei Tunnel- und Gebäudebränden zu schaffen.

Diese Aufgabe wird gelöst durch einen Simulator mit den Merkmalen des Anspruchs 1. Vorteilhafte Ausgestaltungen sind Gegenstand der Unteransprüche.

Der erfindungsgemäße Simulator ermöglicht es insbesondere der breiten Masse der Tunnelbenutzer, also Kraft-, dabei besonders LKW- und Busfahrern, das richtige Verhalten bei einem Tunnelbrand zu trainieren. Nur dadurch wird gewährleistet, dass die der Sicherheit im Tunnel dienende aufwändige Technik effektiv genutzt wird. Der erfindungsgemäße Simulator besitzt einen Raum, in dem sich die übenden Personen befinden. Durch Sichtbehinderungsmittel, z.B. in Gestalt eines Rauchgenerators, wird der Raum, nachdem die Personen diesen betreten haben, mit Rauch gefüllt, so dass die im Raum aufgestellten Rettungsmittel, z.B. eine Fluchttüre, nicht mehr oder nur schwer erkennbar sind. Es ist aber auch möglich, in dem Raum zunächst an einem Brandbekämpfungssimulator, der z.B. an einer PKW-Attrappe vorgesehen ist, von den Übungsteilnehmern einen Brand löschen zu lassen. Nach dem simulierten Löschen des Brandes soll die Rauchentwicklung jedoch nicht gestoppt werden, weshalb sich der Simulator nach und nach mit Rauch füllt. Durch die im Raum vorgesehenen Orientierungsmittel, z.B. Leuchtstreifen, Pfeile Wandoder Bodenmarkierungen, lernen die übenden Personen, die Bedeutung dieser Orientierungshilfen zu erkennen und diesen zu vertrauen, um die rettende Tür zu erreichen. Als Raum für den Simulator ist im Prinzip jeder Raum denkbar, wie z.B. Keller, Hallen, Garagen, Container; aber auch Ladeflächen auf Fahrzeugen oder Auflieger. Unter Sichtbehinderungsmitteln werden alle diejenigen Vorrichtungen verstanden, die geeignet sind, die Orientierung der im Raum befindlichen Personen zu erschweren, also insbesondere Rauch, Rauchgeneratoren, Verdunkelung, Licht- und Blendeffekte, sowie Flammen. Als Orientierungsmittel ist alles das geeignet, was von Personen genutzt werden kann, um einen gewünschten Ort, also ein Rettungsmittel, zu erreichen, Es handelt sich dabei um Kriterien zur Entscheidungsfindung, beispielsweise der Entscheidung, ob die nächste Fluchttüre rechts oder links vom Ausgangspunkt liegt. Als Orientierungsmittel sind besonders geeignet: Lichter, Lichterketten, Schilder, Wand- und Bodenmarkierungen, Leuchtstreifen, Blinker und dergleichen. Die im Simulator vorgesehenen Orientierungsmittel helfen dem Übenden dabei, unter erschwerten Bedingungen nach derartigen Orientierungshilfen zu suchen und sie richtig zu verstehen. Der Übende lernt die Orientierungsmittel zu benutzen, um schnellstmöglich zu den Rettungsmitteln zu gelangen. Unter Rettungsmittel werden alle diejenigen Gegenstände verstanden, die es von einem Brand betroffenen Personen ermöglichen, den Raum zu verlassen, Hilfe zu rufen, Leben oder Sachwerte in der Brandzone zu schützen oder einen Brand zu bekämpfen. Als Rettungsmittel besonders geeignet sind daher Türen, Luken, Alarmgeber, Telefone, Rauchmasken, Löscheinrichtungen und Handfeuerlöscher.

Eine Brandsituation in einem Tunnel kann dann im erfindungsgemäßen Simulator besonders realistisch geübt werden, wenn der Raum des Simulators im wesentlichen einem Tunnelausschnitt nachempfunden ist. Typische Attribute eines Tunnels sind der Fahrbahnbelag, Fahrbahnmarkierungen, Fahrbahnbegrenzungen, Verkehrsschilder, gebogenen Wände und dergleichen.

In einer weiteren Ausgestaltung sind Vorrichtungen zum Erzeugen von Rauch, der die Sicht behindert, vorgesehen. Eine weit verbreitete Methode ist dabei, das Verdampfen eines Nebelfluids, das üblicherweise im Theater oder in Discotheken Verwendung findet, das im Gegensatz zu echtem Rauch nicht gesundheitsschädlich. ist. Ein derartiges Nebelfluid wird beispielsweise unter der Bezeichnung Safex vetrieben. Es sind aber auch andere vergleichbare Verfahren, wie z.B. Trockeneis oder LN₂-Bodennebel einsetzbar.

Wenn im Simulator Beleuchtungsmittel, beispielsweise zur Simulation der Tunnelbeleuchtung, vorgesehen sind, können Situationen mit und ohne Stromausfall geübt werden. Auch können die Beleuchtungsmittel derart ausgestaltet sein, dass sie Kfz- oder LKW-Scheinwerfern nachempfunden sind, um die bei einem Tunnelbrand typische Beleuchtungssituation nachzustellen.

Es ist ferner zweckmäßig, im Simulator die für ein Feuer typische Beleuchtung der Situation nachzustellen, beispielsweise um den Betroffenen Aufschluss über die vermeintliche Feuerquelle zu geben. Der Brand kann dabei entweder durch verschieden farbige, blinkende feuerfarbene Lichtquellen (synthetisches Feuer) oder durch eine Feuerstelle, beispielsweise eine mit Gas betriebene und regelbare Flamme, simuliert werden, Beim Umgang mit echtem Feuer empfiehlt es sich, die Feuerstelle beispielsweise durch eine Glasscheibe oder Gitter vor versehentlicher Berührung durch die Übenden zu schützen. Das Gitter hat den Vorteil, dass auch das Löschen des Feuers eines Brandbekämpfungssimulators, der auch unter dem Namen "Real-Fire-Trainer" bekannt ist, trainiert werden kann.

In einer weiteren Ausgestaltung sind die Orientierungsmittel derart gestaltet, dass sie zu den Rettungsmitteln führen. Wenn man den Orientierungsmitteln, beispielsweise in Form einer auf dem Fußboden mit Richtungspfeilen versehenen, selbstleuchtenden, durchgehenden Linie einfach bis zum Ausgang folgen kann, bedarf es besonders wenig geistiger Arbeit, und es fällt den in Panik befindlichen Personen leichter, den Ausgang zu finden.

Wenn der im Simulator zu findende Ausgang beispielsweise eine Originaltunnelfluchttüre ist, erlernt der Übende nicht nur das Auffinden, sondern auch das Handhaben derselben. Er weiß beispielsweise, in welche Richtung die Tür zu öffnen ist und welche Kraft man zum Öffnen aufbringen muss. Im Ernstfall wird der Übende nicht wichtige Sekunden dadurch verlieren, dass er z. B. zunächst probiert, die Tür in falscher Richtung zu öffnen, bzw. eine Schiebetür durch Ziehen oder Drücken zu öffnen und umgekehrt. Unter Tunnelfluchttüre werden alle diejenigen Türen verstanden, die die für die Handhabung wichtigen Merkmale von in Tunneln üblicherweise als Sicherheitstür bei Fluchtwegen eingesetzten Türen aufweisen. Wegen der im Rauch extrem kurzen Sichtweite ist es nicht nötig, dass der Tunnelsimulator besonders lang ist um das Erlebnis des Orientierungsverlustes zu erleben.

In einer weiteren Ausgestaltung ist der Simulator transportabel, d.h., es ist möglich, ihn wegen seiner schnellen Auf- und Abbaubarkeit an wechselnden Einsatzorten zu benutzen. Der mobile Simulator hat gegenüber einem fest, beispielsweise in einem Gebäude, installierten Simulator den Vorteil, dass er dorthin transportierbar ist, wo er benötigt wird. Anstelle beispielsweise die Angestellten einer Spedition zu einem Simulator an einem entfernten/Ort zu schicken, wird der Simulator für einige Stunden auf das Betriebsgelände der Spedition verbracht, um die LKW-Fahrer zu trainieren. Durch die Mobilität können die Investitionen zur flächendeckenden Schulung beispielsweise aller LKW- oder Busfahrer geringer bleiben. Wenige mobile Simulatoren sind gut auslastbar, da sie nicht auf ein Einzugsgebiet beschränkt sind.

In einer weiteren Ausgestaltung ist der Simulator zu diesem Zweck auf einem LKW oder Auflieger montiert. So kann beispielsweise ein zum Simulator umgebauter Container auf dem LKW aufliegen oder der Laderaum eines LKW's zum Simulator umgebaut sein. Es entfällt daher das Auf- und Abladen des Simulators, und dieser ist besonders flexibel an verschiedenen Einsatzorten verwendbar.

Ein mit dem Simulatorraum verbundener Fluchtraum kann in einer weiteren Ausgestaltung Rettungsmittel, z. B. Feuerlöscher, Rauchmasken oder Telefone aufnehmen. Dies ermöglicht eine besonders realistische Durchführung der Notfallverfahren. Die Übenden können dann nämlich besonders praxisnah die folgenden, beispielhaft aufgezählten Schritte erlernen: Finden und Benutzen der Orientierungsmittel; Auffinden der Fluchttüre; Öffnen der Fluchttüre; Betreten des Fluchtraumes; Auffinden und Handhaben der Rauchschutzmaske; Auffinden des Feuerlöschers; Verlassen des Fluchtraumes und Auffinden der Feuerstelle im Simulatorraum; Löschen des Feuers und schließlich das Retten Hilfloser sowie das erneute Verlassen der Gefahrenzone.

In einer weiteren Ausgestaltung der Erfindung ist vorgesehen, dass der Fluchtraum oder der Brandbekämpfungssimulator in Bezug auf den Simulatorraum verfahrbar ist. Wenn der Simulator nicht benutzt wird oder transportiert wird, wird der Fluchtraum in das Innere des Simulatorraumes gefahren, so dass das Außenmaß des Simulators genauso groß wie das des Simulatorraums ist. Der Simulator ist also zum Transport auf ein kompaktes Maß reduziert. Beim Betrieb des Simulators wird dagegen der Fluchtraum aus dem Simulatorraum herausgefahren, so dass er an den Simulatorraum angrenzt. Im Simulatorraum steht dann wieder genügend Platz zum Üben der Erlangung der Orientierung zur Verfügung. Der Fluchtraum und der Simulator weisen dann eine gemeinsame Wand mit der Fluchttüre, die die beiden Räume miteinander verbindet, auf.

Da wegen der starken sichtbehinderten Wirkung des Rauches grundsätzlich auch ein kleiner Raum zum Fluchttraining ausreicht, da die Wände bei einem Abstand von 1 m ohnehin kaum sichtbar sind, kann der Fluchtrgum bzw, der Brandbekämpfungssimulator natürlich auch im Inneren des Simulatorraums untergebracht sein. Dies gilt insbesondere, wenn die Breite des als Simulator ausgebildeten LKW's bzw. Aufhängers oberhalb der Normbreite von 2,55 m liegt, z.B. 2,80 m liegt.

Der LKW, der für den Transport des Simulators sorgt, kann darüber hinaus noch genutzt werden, um die Brandbekämpfung an insbesondere bei Tunnelbränden typischerweise auftretenden Orten zu erlernen. Dazu sind am LKW, insbesondere in der Kabine, bei den Reifen oder Bremsen oder im Motorraum Vorrichtungen zum Erzeugen von künstlichem (Lichteffekte) Feuer und/oder Rauchgeneratoren vorgesehen. Die zuvor genannten Feuer lassen sich durch ein simuliertes Feuerlöschen an den richtigen Stellen löschen, wobei beispielsweise Feuerlöscher, die einen Druckluftstrahl liefern, eingesetzt werden, um an der simulierten Brandstelle befindliche Druckluftsensoren zu aktivieren, die wiederum Ausbreitung oder Rückgang des simulierten Feuers beeinflussen.

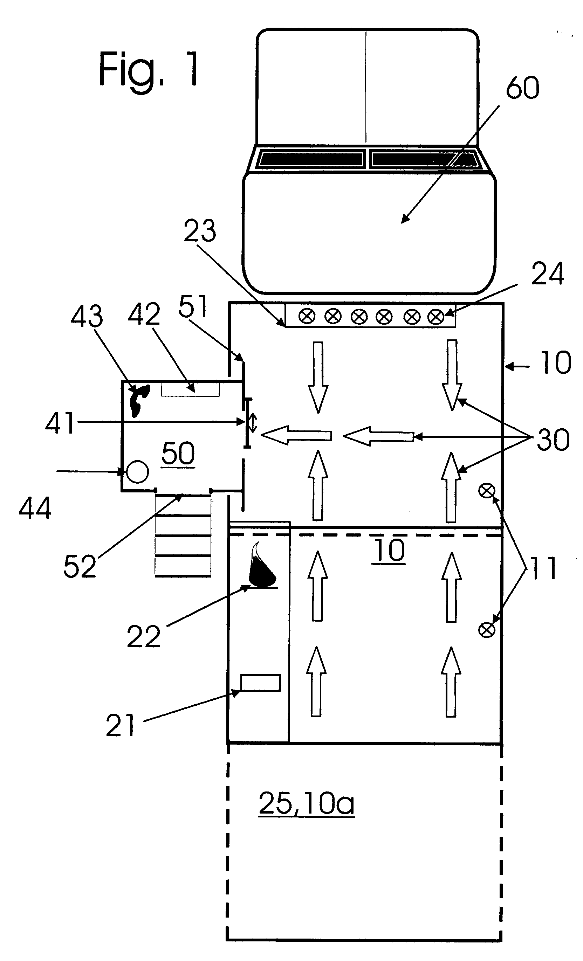

Im folgenden wird die Erfindung anhand eines Ausführungsbeispiels erläutert, und zwar zeigt die Figur 1 einen erfindungsgemäßen Simulator, der auf der modifizierten Ladefläche eines LKW aufgebaut ist. Der Simulator umfasst im wesentlichen die beiden Räume 10, 10a und 50. Im Inneren des Simulatorraums 10 befinden sich der REAL-FIRE-TRAINER, der im Stand aus dem Raum 10 herausgezogen wird und die Mittel 21, 22, 25, 23 zum Simulieren eines Brandes und dessen Begleiterscheinung. Der Rauchgenerator 21 sorgt beispielsweise für eine erhebliche Sichtbehinderung und für die Orientierungslosigkeit der Übungsteilnehmer. Der Teilnehmer erlebt beispielsweise wie die rauchfreie Höhe über dem Boden immer weiter absinkt und lernt in der Praxis kennen, wie Rauch entsteht und wie schnell sich das unmittelbare Umfeld verändert, sowie wann und wohin er bei auftretendem Rauch fliehen muss und welche Möglichkeiten ihm verbleiben, wenn der Fluchtweg und das Fluchtziel durch Rauch kaum noch oder überhaupt nicht zu sehen ist. Ziel der Übung ist dabei, dass die Teilnehmer in einer solchen Situation nach Orientierungshilfen, wie zum Beispiel den auf dem Boden aufgebrachten Pfeilen 30 suchen und diesen zum rettenden Ausgang 41 folgen. Die pfeilartigen Bodenmarkierungen 30 sind dabei lediglich ein Beispiel für Orientierungsmittel.

Über die Originalfluchttunneltür 41 erreicht der Teilnehmer den vergleichsweise sicheren Fluchtraum 50. In diesem findet er die in echten Tunnelfluchträumen üblicherweise vorgesehenen Rettungsmittel, wie zum Beispiel Notruftelefon 43, Rauchmasken 42 und Feuerlöscher 44, an, Nach Beendigung der Übung kann der Teilnehmer über den Ausgang 52 den Simulator verlassen, dies entspricht in der Praxis dem Übergang vom Fluchtraum in die Rettungsstollen. Der Fluchraum 50, der im Bild in der weitgehend ausgefahrenen Position dargestellt ist, ragt auf der linken Seite über den Lastwagenaufbau hinweg, um im Simulatorraum 10 Raum zu schaffen. Wenn der mobile Simulator über Straßen zu einem anderen Einsatzort gefahren wird, wird die Treppe am Ausgang 52 entfernt und der Fluchraum 50 wird nach rechts in das Innere des Simulatorraumes 10 und damit der Ladefläche des Lastwagens verfahren. Durch den ausfahrbaren Fluchtraum 50 wird also die zur Verfügung stehende Grundfläche des Simulators vergrößert.

Je nach zu simulierender Umgebung kann der Simulatorraum 10 anders ausgestattet sein. Dabei wählt man möglichst Gegenstände und Attribute, die für eine zu simulierende Umgebung typisch sind, beispielsweise eine Wohnungs-, Küchen-, Laboreinrichtung, Industrieausstattung oder die für Straßentunnel typischen Merkmale.

Z. B. ist bei Tunneln der Boden einer Asphaltdecke nachempfunden und mit straßentypischen Markierungen, Seitenstreifen, Fußwegen, Leitplanken oder Seitenpfosten etc. versehen. Die Seitenwände können beispielsweise betonartig gestaltet sein und sich nach oben hin röhrenartig verjüngen. Die Straßenbeleuchtung 11 dient dazu, die Situation mit oder ohne Stromausfall zu trainieren. Auch ist es denkbar, für die Gefährdungssituation typische Gegenstände, beispielsweise Autos oder wesentliche Teile von Autos, wie zum Beispiel einen Radkasten oder den Vorderteil eines Autos mit Motorhaube, mit in die Simulation einzubeziehen. Wichtig ist dabei, dass die vorgenannten Hilfsmittel geeignet sind, dem Teilnehmer die Illusion zu vermitteln, er befinde sich an dem simulierten Ort.

In Nähe des Rauchgenerators 21 kann auch eine synthetische regel- und steuerbare Feuerstelle 22 vorgesehen sein. Besonders realitätsnah wird das Training, wenn im Rahmen der Simulation unter erschwerten Bedingungen ein praktisches Feuerlöschtraining am offenen Feuer und Rauch in einem Brandlöschsimulator 25 (REAL-FIRE-TRAINER) durchgeführt werden kann. Damit kann der Teilnehmer beispielsweise lernen, einen Feuerlöscher im Notfall richtig einzusetzen. Normale PKW-Feuerlöscher haben beispielsweise ein Fassungsvermögen von 1 kg Löschpulver. Diese Menge reicht aus, um einen PKW-Brand im Anfangsstadium zu löschen, aber nur dann, wenn der Benutzer den Inhalt sicher an die richtige Stelle verbringt. Feuerlöscher in Lastwagen und Omnibussen haben ein Fassungsvermögen von mindestens 6 kg. Mit ihnen kann auch ein größerer Brand gelöscht werden, solange er sich im Anfangsstadium befindet. Der sogenannte REAL-FIRE-TRAINER 25 10a ist fester Bestandteil des Simulators, jedoch aus Sicherheits- und Feuerschutzgründen hermetisch gegen diesen abgeschlossen. Er lernt, wie schnell er ein Feuer löschen kann, aber auch wie schnell der Feuerlöscher leer und die Wirkung verpufft ist, wenn er falsch eingesetzt wird.

Das zuvor beschriebene praktische Feuerlöschtraining ist dann besonders wirkungsvoll, wenn es mit einem praktischen Fluchttraining verbunden wird. Dabei lernt der Teilnehmer mehr über die Geschwindigkeit und Entstehung und Verbreitung von Rauch, dem Anlegen und Handhabung von Rauchmasken und der praktischen Flucht aus einem raucherfüllten Streckenabschnitt unter Ausnutzung der eigenen und fremden Hilfsmittel. Der Teilnehmer lernt in der Praxis kennen, wie Rauch entsteht und wie schnell sich das unmittelbare Umfeld verändert, wann und wohin der bei auftretendem Rauch fliehen muss und welche Möglichkeiten ihm verbleiben, wenn der Fluchtweg durch Rauch kaum noch zu sehen ist.

Der Real-Fire-Trainer wird bereits im Luftfahrttraining für Besatzungen, wie Piloten und Flugbegleiter praktiziert. Derartige Brandbekämpfungssimulatoren arbeiten mit einer echten Flamme, die bei dem richtigen Einsatz der Feuerlöscher simuliert gelöscht /bekämpft werden. Die Flamme wird dabei nicht zwingend wirklich gelöscht, sondern es wird überprüft, ob beispielsweise der aus dem Feuerlöscher kommende Druckluftstrahl auf die richtigen Stellen des Feuersimulators einwirkt. Im Ergebnis entsteht für den Teilnehmer der Eindruck, er habe das Feuer tatsächlich gelöscht.

Die durch den Rauch erzeugt Orientierungslosigkeit kann dadurch noch verstärkt werden, dass Beleuchtungsmittel 11 oder 24, sowie Blitzlichter eingesetzt werden. Die verschiedenfarbigen Leuchten 24 simulieren, wenn richtig angesteuert, die Flackerwirkung eines Feuers. Blitzlichter sorgen für eine vorübergehende Blendung der Teilnehmer und für zusätzlichen Streß, ebenso wie Lärm in Form von z.B. Schreien, Straßenlärm, Signaleinrichtungen.

Der fahrbare Simulator kann darüber hinaus - außerhalb des Simulatorraums - für ein erweitertes praktisches Feuerlöschtraining verwendet werden, nämlich wenn Brand und/oder Rauchsimulatoren an typischen Stellen, beispielsweise in der Kabine in der Motorhaube, an den Rädern oder Bremsen vorgesehen sind.

In einer weiteren vorteilhaften Ausgestaltung kann der Simulator zum Beispiel wie folgt aussehen und verwendet werden: Der fahrbare Simulator besteht im wesentlichen aus einer Zugmaschine und einem Auflieger, der den Tunnelfluchsimulatorraum bildet. Es ergeben sich erfindungsgemäß zwei Nutzungsmöglichkeiten:

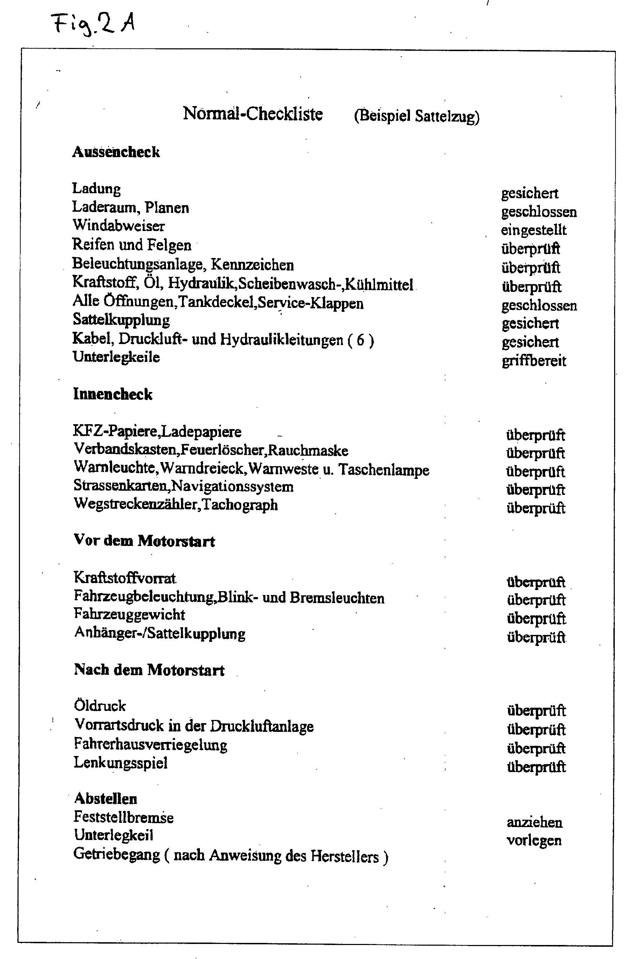

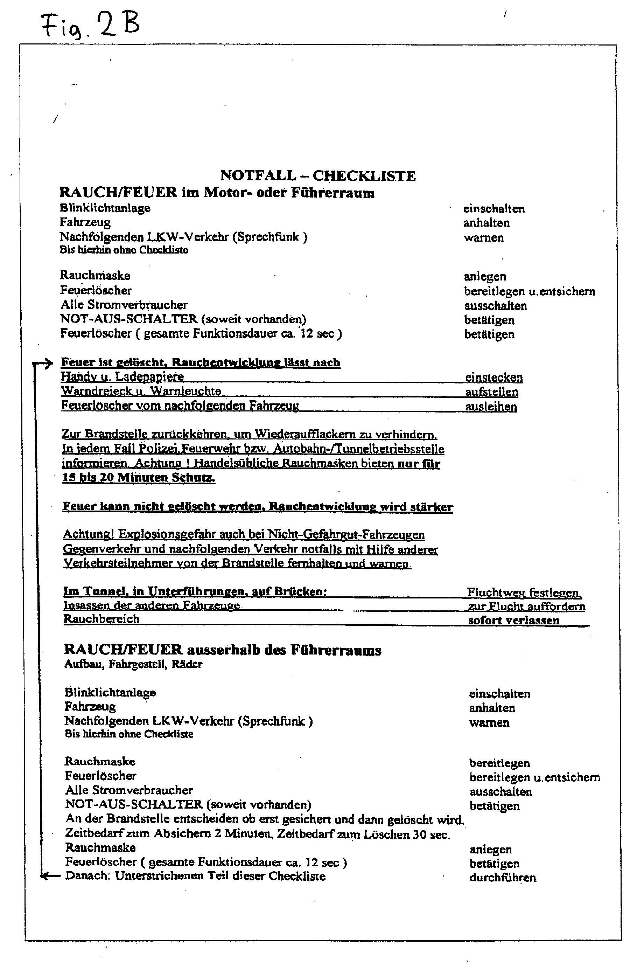

Im aufgesattelten und fahrfähigen Zustand ist das Feuer- und Rauchtraining für den Fahrer oder seine Begleitung während der Fahrt möglich. Dabei besteht für den mitfahrenden Trainer die Möglichkeit, von dem Beifahrersitz aus Rauch- oder Feuersituationen im Motorraum, Führerhaus, an allen Rädern und an dem Aufliegeraufbau zu simulieren und den Fahrer damit zu veranlassen, nach dem Abstellen des Lastzugs die erforderlichen Maßnahmen einzuleiten. Derartige Maßnahmen umfassen auch, dass der LKW-Fahrer die Ladepapiere noch vor einem ersten Löschversuch aus dem Führerhaus nimmt, damit die Rettungskräfte wissen, was geladen ist und wie gelöscht werden muss. Um sicherzustellen, dass der Fahrer auch noch längere Zeit nach seinem letzten Notfalltraining in der Lage ist, einen Vorfall richtig abzuarbeiten, kann eine Checkliste, wie sie sich in der Luftfahrt seit Jahrzehnten bewährt hat, ausgelegt werden, die beispielhaft in Fig. 2A und 2B dargestellt ist. Rauch und Feuer werden wie bereits beschrieben künstlich erzeugt und stellen damit keine wirkliche Gefahr dar. Ähnlich wie bei Fahrschulfahrzeugen, kann der Trainer jederzeit das Fahrzeug von seinem Sitz aus kontrollieren, um es beispielsweise anzuhalten. Dennoch verbietet sich ein Training im öffentlichen Verkehrsraum, um den übrigen Verkehr nicht zu gefährden. Zu der Übung kann es auch gehören, dass Brände bzw. eine Rauchentwicklung am Auflieger während der Fahrt, beispielsweise im Rückspiegel, entdeckt wird.

Bei stehendem Fahrzeug kann der Simulator dann, wie in Zusammenhang mit Fig. 1 beschrieben, zur Tunnelrettung verwendet werden. Dabei kann der Brandbekämpfungssimulator (Real-Fire-Trainer) aus Brandschutzgründen in einem geschlossenen Container untergebracht sein, welcher ähnlich wie der Fluchtraum aus dem Simulator, insbesondere nach hinten herausgezogen werden kann, so dass er nur noch mit einer seiner Kanten auf einer der Kanten des Aufliegers aufliegt, Daraus ergeben sich die selben Vorteile, wie bei dem bereits beschriebenen herausziehbaren Fluchtraum. Weitere Türen zum Brandbekämpfungssimulator, der kabinenartig ausgestaltet ist, können auch seitlich angebracht werden, damit dieser vielseitiger verwendbar ist, d.h. unabhängig von einer gestellten Rauchsituation. Im mittleren Teil des Aufliegers befindet sich der ebenfalls auf Schienen gelagerte und seitlich aus dem Auflieger herausziehbare Fluchtraum, welcher ebenfalls nur noch mit einer Kante auf dem Auflieger liegt. Die Verbindungstür (Tunnelfluchttür) kann auch Bestandteil der seitlichen Aufliegerwand sein. Der Fluchtraum kann auch zusätzlich Verbandskästen, Sand, Wasser und eine Lautsprecheranlage für Durchsagen enthalten. Das Wiederauffüllen der (simulierten) Feuerlöscher kann besonders einfach durchgeführt werden, wenn die Auffüllstation Bestandteil des Simulators oder Fluchtraums ist. Besonders realistisch wirkt die Situation, wenn im Inneren des Simulators, beispielsweise im ersten Drittel des Aufliegers, die vordere Hälfte eines PKWs montiert ist, in dessen Motorraum und Fahrgastzelle, ebenso wie unter dem Dach und an den Seitenwänden des Simulatorraums, Rauchgeneratoren, sowie Anlagen zur Darstellung von Feuer, beispielsweise synthetischem Feuer, installiert sind. Diese Anlagen können vom Trainer über ein Bedienteil, welches sich auch im Auflieger befinden kann, aktiviert und gesteuert werden. Aus Sicherheitsgründen sind je eine Tür an der Kopfseite und an den Längsseiten an dem simulatorbildenden Auflieger vorgesehen, damit dieser im echten Notfall von den Übungsteilnehmern schnell verlassen werden kann.

Die zuvor beschriebenen Ausführungsbeispiele für mobile Brandbekämpfungs- und Fluchtsimulatoren können besonders wirtschaftlich bzw. flächendeckend durch ihre Mobilität betrieben werden. Dieser erfindungsgemäße Gedanke ist auch auf andere Gebiete, bei denen Simulatoren eingesetzt werden, übertragbar. Für Kabinenbesatzungen von Luftfahrtgesellschaften werden üblicherweise stationäre Kabinentrainer und Brandbekämpfungssimulatoren in Trainingszentren für Notfalltraining der Luftfahrt bereitgestellt. Alle Fluggesellschaften müssen in solchen Simulatoren mit ihrem Personal das gesetzlich vorgeschriebene Notfalltraining durchführen. Die Durchführung des Trainings ist mit erheblichen Kosten verbunden, da entweder das Trainingszentrum weit abseits des Flughafens liegt, wodurch sich hohe Reisekosten und Verdienstausfälle ergeben, oder das Trainingszentrum sich am oder im Flughafen befindet, wodurch sich hohe Raummieten und damit verbunden hohe Trainingskosten ergeben.

Es ist daher eine weitere Verbesserung, das Kabinennotfalltraining und insbesondere das vorgeschriebene Türtraining zum routinemäßigen Beherrschen der Türöffnung in Notfällen, sowie das Benutzen der Notrutsche, auf einem mobilen Simulator durchzuführen. Die beschriebenen mobilen Simulatoren können beispielsweise ein begehbares Dach aufweisen und mit unterschiedlichen Flugzeugtüren auf diesem Dach ausgestattet sein. Die Türen sind an ihrem jeweiligen unteren Türrahmenelement aufschwenkbar, vergleichbar einer Kabinentüre, befestigt. Das Rahmenelement ist an seiner unteren Seite fest mit Scharnieren seitlich am oder auf dem Fahrzeugdach befestigt und kann hydraulisch aufgestellt werden, so dass Rahmen und Türe im wesentlichen eine vertikale Position einnehmen. Der Aufstieg zum Dach erfolgt über eine Treppe, die beispielsweise zusammen mit dem Fluchtraum ausgefahren werden kann. Wenn an der äußeren unteren Kante der Flugzeugtür eine Rutsche angebracht ist, kann die Notevakuierung aus einer Höhe von z.B. 4 m vom Dach des LKWs realistisch durchgeführt werden. Das Verlassen des Flugszeugs über die Notrutsche ist wichtiger Bestandteil der Sicherheitsausbildung.

In Ruhestellung liegen die deaktivierten Flugzeugtüren zusammen mit dem Rahmenelement im eingeklappten Zustand auf dem Dach, so dass der Lastwagen die maximal zulässige Höhe bei der Fahrt nicht überschreitet. Die Einrichtungen auf dem Dach können durch ein weiteres Dach, beispielsweise in Gestalt einer Persenning oder eines hydraulisch hochfahrbaren zweiten Dachs gegen Umwelteinflüsse geschützt sein.

Eine weitere Idee liegt darin, Mittel an Fahrzeugen vorzusehen, die optisch einen Temperaturanstieg an einem bestimmten Bereich anzeigen, einzusetzen. Darunter sind alle diejenigen Maßnahmen z.B. an einer Felge, einem Radkasten, den Lagern oder den Bremsen zu verstehen, die einen Brand oder einen entstehenden Brand durch Verformung oder Verfärbung lokal sichtbar machen. Dadurch ist die Brandquelle unter Umständen schon von weitem erkennbar und Personen werden beispielsweise beim Öffnen einer Tür nicht von einer Stichflamme überrascht. Derartige Mittel, die sowohl einen Brand signalisieren, als auch ihn beispielsweise durch Freisetzung bestimmter Stoffe zu bekämpfen oder einzudämmen vermögen, sind Gegenstand einer besonders vorteilhaften Ausgestaltung wegen dieser Doppelfunktion. Es kann auch Gegenstand des Simulatortrainings sein, derartige optische Signale zu erkennen.

Die zuvor genannten Ideen, insbesondere die auf dem Dach aufgebaute Flugzeugtür, als auch die Mittel zum optischen Erkennen von Bränden, entfalten ihre vorteilhafte Wirkung auch unabhängig von dem insbesondere in Fig. 1 dargestellten Simulator. In ihrer Kombination lassen sich dagegen besonders hohe Synergieeffekte erzielen, da ein derartig ausgestaltetes Fahrzeug zahlreiche Aufgaben erfüllen kann und daher besonders vielseitig einsetzbar ist.

Im folgenden wird an Hand der Fig. 2A und 2B der Einsatz von Checklisten im Kraftverkehr vorgeschlagen. Im übrigen erläutern die beispielhaften Checklisten Möglichkeiten des Simulatortrainings, wobei die Checklisten auch als Gedächnishilfe für den Notfall dienen können. Die Grundüberlegung zum Einsatz von Checklisten besteht in der Absicht notwendige Arbeitsabläufe zu kanalisieren und der Erkenntnis, dass schon geringe Ablenkungsereignisse ausreichen um einen fehlerfreien Ablauf zu stören. Im LKW ist der Fahrer u.a. für das Fahrzeug und die Ladung verantwortlich, Es findet nach Abschluss der Beladung keine Arbeitsteilung mehr statt, weil selbst Fernlastzüge heute nur noch mit einem Fahrer besetzt sind.

Im fliegerischen Bereich werden seit Jahrzehnten sowohl im privaten, als auch im kommerziellen Bereich Checklisten zur Verbesserung der Betriebs- und Verkehrssicherheit verwendet, obwohl in der Regel das Cockpit mit zwei Flugzeugführern besetzt ist. Es werden grundsätzlich zwei Arten von Checklisten verwendet. 1) Die Normal-Checkliste und 2. Die Notfall-Checkliste. Die Durchführung der Normal-Checkliste stellt sicher, dass alle erforderlichen Tätigkeiten und Vorbereitungen abgeschlossen sind. Die Checklisten-Philosophie unterscheidet sich nicht nur nach dem verwendeten Flugzeugmuster, sondern auch nach den Anforderungen der jeweiligen Luftfahrtgesellschaft. In der Praxis führen die Piloten alle Vorbereitungen und Überprüfungen jeder für seinen Bereich zunächst auswendig durch. Danach wird die Durchführung aller Punkte gemeinsam anhand der Checkliste überprüft und, falls erforderlich, ergänzt.

Auf den Lastzug übertragen bedeutet dies, dass der Fahrer wie gewohnt seine Vorbereitungen und Überprüfungen durchführt. Nachdem dies geschehen ist, prüft er anhand der Checkliste, ob er nicht einen Punkt übersehen oder vergessen hat. Der zusätzliche Zeitaufwand ist sehr gering und im Verhältnis zum Zugewinn an Sicherheit und letztlich auch an Wirtschaftlichkeit unbedeutend. Es hat nichts mit der Qualität des Fahrers, seinen Fähigkeiten und seinem Verantwortungsbewusstsein zu tun, wenn der eine oder andere Punkt zunächst nicht durchgeführt wird. Dies hängt sehr vielmehr häufig davon ab, ob und wie weit er durch äussere Einflüsse, beispielsweise durch einen Handy-Anruf, gestört wird.

Die beispielhafte Normal-Checkliste aus Fig. 2A kann nur in Verbindung mit der Betriebsanleitung des Herstellers der Zugmaschine sowie des Aufliegers/Anhängers und den Vorgaben des Transportunternehmers erstellt werden. Das Beispiel einer Checkliste ist in Fig. 2A und 2B abgebildet. Checklisten dürfen nur bei Stillstand des Fahrzeuges verwendet werden.

Bei Zwischen- und Notfällen treten beim Menschen medizinische Ereignisse ein (Adrenalin wird ausgestossen, der Blutdruck steigt, die Pulsfrequenz nimmt zu, etc.), die er selbst nicht mehr willentlich beeinflussen kann. Die Wirkung kann weder für die einzelne Situation, noch für den einzelnen Menschen vorhergesagt werden. Sie kann bei forschen Typen Panik erzeugen und bei ansonsten ängstlichen Typen ungeahnte Kräfte und Einsatzbereitschaft auslösen. Da im Notfall jedoch beide dieselben Arbeitsabläufe durchführen müssen, um zu verhindern, dass aus einem unbedeutenden Zwischenfall eine Katastrophe entsteht, wird eine Notfall-Checkliste, wie z.B. in Fig. 2B abgebildet, eine grosse Hilfe sein. Allerdings auch hier gilt, dass Checklisten nur bei Stillstand des Fahrzeuges verwendet werden dürfen. In der Notfall-Checkliste sollen keine Störungen enthalten sein, diese sind Bestandteil der zugehörigen Betriebsanleitung. Es dürfen auch nur solche Punkte enthalten sein, die eine schnelle und geregelte Massnahme erfordern und bei deren Nichtbeachtung sich die Auswirkungen und Schäden eines Notfalls beträchtlich erhöhen. Prioritäten können von der Norm abweichen, sofern die Sicherheit das erfordert.

Im folgenden werden die beigefügten Checklisten erläutert; Die ersten drei Zeilen der Checkliste sollen auswendig durchgeführt werden, weil das Fahrzeug zu diesem Zeitpunkt noch in Bewegung ist.

Zum Punkt "Rauchmaske anlegen": Der Rauch entwickelt sich im Führerhaus sehr schnell und ist außerordentlich giftig, so dass nachfolgende Aktionen nur mit angelegter Rauchmaske oder gar nicht mehr möglich sind.

Zum Punkt "Feuerlöscher bereitlegen u. entsichern": Der Feuerlöscher muss unmittelbar nach Anlegen der Rauchmaske griffund betriebsbereit sein, da sich die Sichtverhältnisse sehr schnell verschlechtern.

Zum Punkt "Alle Stromverbraucher ausschalten" und "Notausschalter betätigen": Bevor die Stromverbraucher und damit die möglichen Ursachen für Feuer und Rauch nicht ausgeschaltet sind, sollte der Feuerlöscher nicht eingesetzt werden.

Zum Punkt "Feuerlöscher betätigen" : Der 6 kg-Feuerlöscher hat eine durchschnittliche Funktionsdauer von 12 sec. Kann das Feuer in dieser Zeit nicht gelöscht werden, dann kann nur noch Löschhilfe von aussen Abhilfe verschaffen. Diese ist jedoch wegen der Kürze der Zeit nicht rechtzeitig zu erwarten.

Die zur Verfügung stehende Zeit ist so knapp, dass der Erfolg schon durch einen einzigen Fehler oder durch eine falsche Reihenfolge in Frage gestellt ist. Wird der Ablauf korrekt nach der NOTFALL-CHECKLISTE durchgeführt, kommt es zusätzlich darauf an, dass die löschende Person mit der Handhabung des Feuerlöschers vertraut ist und die geeignete Löschtaktik anwendet. Eine Absicherung des nachfolgenden Verkehrs vor dem Löschen ist nicht möglich, weil während der dazu benötigen Zeit aus einer kleinen Flamme ein grosses Feuer wird und dieses und die damit verbundene Rauchentwicklung ein erneutes Betreten des Führerraums unmöglich macht.

Bei "RAUCH/FEUER" ausserhalb des Führerhaus können abhängig von der Situation andere Prioritäten gesetzt werden., weil zunächst keine unumkehrbaren Situationen eintreten, die Feuerstelle von aussen zugänglich und die persönliche Gefahr im Anfangsstadium geringer ist. Obwohl ein Teil des Rauchs nach oben abziehen kann, ist die Benutzung einer Rauchmaske unverzichtbar. Bereits das Einatmen kleiner Mengen Rauch kann schwere gesundheitliche Schaden hervorrufen und im ungünstigsten Fall eine Bewußtlosigkeit oder Schlimmeres verursachen. Darüber hinaus kommt man nur mit angelegter Rauchmaske ausreichend nahe genug an die Flamme, um diese erfolgreich zu löschen.

## Patentansprüche

1. Simulator, insbesondere zur Simulation von Brand und Rauch, mit einem Raum (10), mit dem Raum verbundenen Sichtbehinderungsmitteln (21, 22, 23) und in dem Raum befindlichen Orientierungsmitteln (30) und Rettungsmitteln (41, 42, 43, 44).

2. Simulator nach Anspruch 1, **dadurch gekennzeichnet, dass** der Raum Fahrbahnbeläge, Fahrbahnmarkierungen (30), Leitplanken, Seitenstreifen, Fußwege, seitliche Reflektoren, Verkehrsschilder oder dergleichen aufweist.

3. Simulator nach Anspruch 1 oder 2, **dadurch gekennzeichnet, dass** die Sichtbehinderungsmittel eine Vorrichtung (21) zum Erzeugen von Rauch, insbesondere einen Verdampfer zum Verdampfen eines Rauchpräparates, umfasst.

4. Simulator nach einem der vorherigen Ansprüche, **dadurch gekennzeichnet, dass** Beleuchtungsmittel (11) im Raum vorgesehen sind.

5. Simulator nach einem der vorherigen Ansprüche, **dadurch gekennzeichnet, dass** ein synthetisches Feuer (23) oder echtes Feuer vorgesehen sind.

6. Simulator nach einem der vorherigen Ansprüche, **dadurch gekennzeichnet, dass** das synthetische Feuer Beleuchtungsmittel (24) mit verschiedenen Farben, insbesondere rot, gelb, orange umfasst.

7. Simulator nach einem der vorherigen Ansprüche, **dadurch gekennzeichnet, dass** eine Feuerstelle (25) vorgesehen ist.

8. Simulator nach einem der vorherigen Ansprüche, **dadurch gekennzeichnet, dass** ein Brandbekämpfungssimulator (22) vorgesehen ist.

9. Simulator nach einem der vorherigen Ansprüche, **dadurch gekennzeichnet, dass** der Brandbekämpfungssimulator einen Druckluftsensor aufweist.

10. Simulator nach einem der vorherigen Ansprüche, **dadurch gekennzeichnet, dass** die Orientierungsmittel Schilder, Symbole, Boden- und Wandmarkierungen umfassen, die vorzugsweise reflektierend, selbstleuchtend, oder hintergrundbeleuchtet sind.

11. Simulator nach einem der vorherigen Ansprüche, **dadurch gekennzeichnet, dass** die Orientierungsmittel derart ausgebildet sind, dass sie zu den Rettungsmitteln führen.

12. Simulator nach einem der vorherigen Ansprüche, **dadurch gekennzeichnet, dass** die Rettungsmittel Alarmierungsmittel, Telefone (43), Notrufsäulen, Löscheinrichtungen, Feuerlöscher, Handfeuerlöscher (44), Rauchmasken (42), Luken oder Türen (41) umfassen.

13. Simulator nach einem der vorherigen Ansprüche, **dadurch gekennzeichnet, dass** die Rettungsmittel eine Tunnelfluchttüre (41) oder eine einer Tunnelfluchttüre nachempfundene Tür umfassen.

14. Simulator nach einem der vorherigen Ansprüche, **dadurch gekennzeichnet, dass** der Simulator transportabel ist.

15. Simulator nach einem der vorherigen Ansprüche, **dadurch gekennzeichnet, dass** der Simulator auf einem LKW, insbesondere auf der Ladefläche eines LKW's oder Aufliegers aufgebaut ist.

16. LKW, insbesondere nach einem der vorherigen Ansprüche, **dadurch gekennzeichnet, dass** an diesem Mittel zur optischen Signalisierung eines Temperaturanstiegs, insbesondere an Türen, Radkästen, Bremsen, Motorhauben, Achsen und dergleichen vorgesehen sind.

17. LKW, insbesondere nach einem der vorherigen Ansprüche, **dadurch gekennzeichnet, dass** eine oder mehrere Flugzeugtüren auf dem Dach des LKWs befestigt sind.

18. LKW, insbesondere nach einem der vorherigen Ansprüche, **dadurch gekennzeichnet, dass** eine Notrutsche auf dem Dach des LKWs befestigt ist.

19. Simulator nach einem der vorherigen Ansprüche, **dadurch gekennzeichnet, dass** ein Fluchtraum (50) über eine Türe, insbesondere Schiebetür (41) oder Luke mit dem Raum (10) verbunden ist.

20. Simulator nach einem der vorherigen Ansprüche, **dadurch gekennzeichnet, dass** der Fluchtraum und / oder der Brandbekämpfungssimulator in Bezug auf den Raum verfahrbar ist.

21. Simulator nach einem der vorherigen Ansprüche, **dadurch gekennzeichnet, dass** der Fluchtraum zwischen einer ersten und einer zweiten Position verfahrbar ist, so dass er sich in der ersten Position im Inneren des Raumes (10) befindet und in der zweiten Position sich neben dem Raum (10) befindet und an diesen angrenzt.

22. Simulator nach einem der vorherigen Ansprüche, **dadurch gekennzeichnet, dass** der Fluchtraum, wenn er sich in der zweiten Position befindet, mit dem Raum (10) eine gemeinsame Wand (51) hat, in der die Türe oder Luke vorgesehen ist.

23. Simulator nach einem der vorherigen Ansprüche, **dadurch gekennzeichnet, dass** in dem Fluchtraum Rettungsmittel, insbesondere Alarmierungsmittel, Telefone (43), Notrufsäulen, Löscheinrichtungen, Feuerlöscher, Handfeuerlöscher (44), Rauchmasken (42), Luken oder Türen (52) vorgesehen sind.

24. Simulator nach einem der vorherigen Ansprüche, **dadurch gekennzeichnet, dass** am LKW, insbesondere in der Kabine (60), bei den Reifen, bei den Bremsen oder im Motorraum Brandbekämpfungssimulatoren, Feuerstellen, synthetische Feuer und / oder Rauchgeneratoren vorgesehen sind.

25. Simulator nach einem der vorherigen Ansprüche, **dadurch gekennzeichnet, dass** eine Steuerung zur Ansteuerung der Sichtbehinderungsmittel, Beleuchtungsmittel, Brandbekämpfungssimulatoren, Feuerstellen, synthetischen Feuer und / oder Rauchgeneratoren vorgesehen ist.
